# EUROPEAN PATENT APPLICATION

(11) **EP 1 788 851 A2**
(43) Date of publication of application: **23.05.2007**
(21) Application number: 06121318.7
(22) Date of filing: 27.09.2006
(51) Int. Cl.: H05B 35/00, F21K 7/00

(54) **Lamp with two light sources**

(30) Priority: 03.10.2005 US 242242
(71) Applicant: Patent-Treuhand-Gesellschaft für elektrische Glühlampen mbH, 81543 München (DE)
(72) Inventor: Jarvio, Peter, Richmond, Kentucky 40475 (US); Kling, Michael R., Lexington, Kentucky 40509 (US)
(74) Representative: Raiser, Franz

(57) **Abstract**

A lamp includes both a light-emitting filament and one or more light-emitting diodes (LEDs) on a lamp base. The LEDs may be electrically connected to the filament and receive their operating current through the filament so that the filament is the ballasting resistor for the LEDs. The filament may be in an incandescent or halogen lamp bulb and aligned along a longitudinal axis thereof, and the LEDs may be positioned on the lamp base symmetrically with respect to the longitudinal axis. The filament emits light of a first color temperature and at least one of the LEDs may emit light of a second color temperature higher than the first color temperature, where the symmetrical arrangement of the LEDs promotes a uniform color temperature of light from the lamp.

## Description

### Background of the Invention

The present invention is directed to a lamp that includes two sources of light within the lamp, and more particularly to a lamp with two sources of light where one of the sources is a light-emitting diode (LED) and the other is not.

A lamp with two sources of light where one of the sources is a LED and the other is an incandescent filament is disclosed in Hofmann et al. US 2005/0105302 A1. This reference discloses that light from the LED is radiated inside a double-walled bulb element and is reflected between the double walls of the bulb element in a manner so that the bulb element itself emits light throughout its length. The double-walled light-emitting bulb element may enclose an incandescent filament. The LED and the incandescent filament are driven separately from one another.

While this type of lamp affords certain advantages, the present inventor has found that the structure and manner in which this lamp is operated are desirably improved.

In addition, LEDs (especially white light emitters) can emit poor quality light with a relatively low color rendering index. Further, LEDs use a current limiting power supply or, more commonly, a ballasting resistor to maintain a stable light output and avoid overheating. Supply voltage must be well above the LED voltage for reliable and safe operation, and a minimum of 20 percent of the voltage is dropped across the ballasting resistor so power losses can be substantial. The driver that includes the ballasting resistor can be expensive and bulky, thereby limiting the use of LEDs in some lighting applications. The quality of light emitted from LED lamps, and the size and cost of lamps that include LEDs are desirably improved.

Sizes of incandescent filaments are determined, at least in part, by the operating parameters of the filament. For example, a filament designed for operation at 24W and 80V is shorter than a 36W/120V filament. Shorter filaments have improved optics and provide better shock resistance. It would be advantageous to provide a lower voltage through the filament so as to be able to use a shorter filament.

The above-noted Hofmann et al. reference also notes that the two light sources can have different color temperatures to vary the overall color temperature of the lamp. The LEDs can be placed in rings at ends of a tubular fluorescent lamp that has an incandescent filament at each end, where the filament is aligned perpendicular to a longitudinal axis of the fluorescent lamp. While this arrangement may be suitable when the bulb element of the fluorescent lamp is double-walled and emits light reflected throughout its length as it does in Hofmann et al., this reference does not suggest a suitable arrangement of the LEDs to uniformly change a color temperature of light emitted from other lamps such as a parabolic aluminized reflector (PAR) lamp that uses an incandescent or halogen lamp as its primary light source.

Color temperature characterizes spectral properties of a light source and is measured in degrees Kelvin. Lower temperatures correspond to warm ("yellow") light while higher temperatures denote a cooler ("blue") light.

### Summary of the Invention

An object of the present invention is to provide a novel hybrid lamp that avoids the problems of the prior art.

A further object of the present invention is to provide a novel lamp with both a light-emitting filament and a LED, where the LED is connected to receive its operating current through the filament, thereby avoiding the need for a separate driver for the LED and reducing a voltage through the filament to reduce filament size.

A yet further object of the present invention is to provide a novel lamp that includes a lamp base, a reflector, an incandescent or halogen lamp attached to the lamp base where the incandescent or halogen lamp includes a filament inside a bulb and the filament is aligned substantially along a longitudinal axis of the reflector, and one or more LEDs on the lamp base outside the bulb and positioned symmetrically with respect to the longitudinal axis where the LEDs receive an operating current through the filament so that the filament is a ballasting resistor for the LEDs.

A still further object of the present invention is to provide a novel lamp that includes a lamp base, an incandescent or halogen lamp that includes a filament inside a bulb where the filament is aligned substantially along a longitudinal axis of the incandescent or halogen lamp, and one or more LEDs on said lamp base outside the bulb and that are positioned symmetrically with respect to the longitudinal axis.

Another object of the present invention is to provide a novel hybrid lamp that uses a filamented incandescent or halogen lamp as a primary light source and in which blue or white LEDs with a higher color temperature than the filament light source are arranged symmetrically with respect to the filament so as to uniformly increase a color temperature of light from the lamp.

These and other objects and advantages of the invention will be apparent to those of skill in the art of the present invention after consideration of the following drawings and description of preferred embodiments.

### Brief Description of the Drawings

Figure 1 is schematic circuit diagram of an embodiment of the lamp of the present invention.

Figure 2 is cross-sectional view of an embodiment of a lamp of the present invention.

Figure 3 is cross-sectional view of a further embodiment of a lamp of the present invention.

Figure 4 depicts a spectral power distribution of a lamp of the present invention where the LED is blue.

### Description of Preferred Embodiments

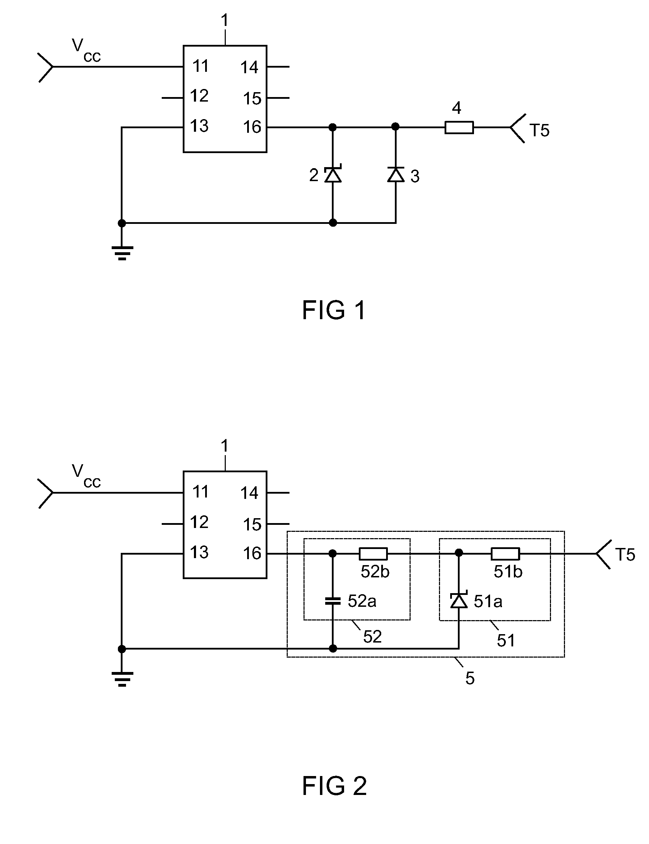

With reference now to Figure 1, an embodiment of the invention uses a filament F of an incandescent or halogen lamp L as the ballasting resistor for an LED (solid state illumination source). LEDs, particularly high power LEDs, are available that operate with a current of 200mA to 700mA. This coincides with normal 120V incandescent and tungsten halogen lamps of about 24W to 80W power. Currently available PAR20, PAR30, and PAR38 lamps have this rated power and are useable in the present invention to provide current regulation for the LED. An LED with a higher maximum current may be controlled with a lower voltage lamp filament, such as a 12V MR16 lamp.

Although LEDs operate efficiently on filtered DC, they also work with full wave rectified 60Hz AC provided the peak current is within specified limits. To this end, a bridge rectifier B may be added to the circuit. The bridge rectifier and filament can be selected to draw the correct current for the specified LED. In this manner, the lamp of the present invention may be operated on 100V to 240V AC mains M without a costly power supply and without an inefficient ballasting resistor. In a further embodiment, the diodes in the bridge rectifier can be LEDs themselves. The circuit may also include other components (not shown), such as a metal oxide varistor surge protector and an NTC varistor to protect the LED from turn-on current. Alternatively, a DC supply can be used without the bridge rectifier.

The pairing of the LED and filament improves the performance of the filament when current is unchanged. Each LED typically has a voltage drop of 3 to 7 volts so a filament connected in series with one or more LEDs will operate at lower than normal line voltage. As noted above, lower filament voltages at constant current permit the use of shorter filaments, which have improved optics and provide better shock resistance. At equal filament wattage, current increases along with filament diameter providing improved life or efficay

In addition, incandescent and tungsten halogen lamps have excellent color rendering and thus the combination of the filament lamp with the LED provides a better quality light than possible with LEDs alone.

Figures 2-3 show particular embodiments of the present invention that use a parabolic aluminized reflector (PAR) on a lamp base that carries a tungsten halogen lamp as a primary light source and one more LEDs as a secondary light source. An electrically heated tungsten coil filament 1 in a glass capsule 2 provides the primary light source. The capsule 2 is mounted in a glass reflector 3 with a light center near a focal point of the inner parabolic surface 5 that is coated with a reflective layer of aluminum. Transparent portions 6 near the bottom of the reflector are hollow or not coated with the aluminum layer (or the aluminum layer is removed) so that light will pass through the portions 6. A transparent glass lens 4 is attached to the front of the reflector. The tungsten halogen lamp is an efficient source of light that is suitable for controlling the LEDs, although the invention is applicable to other incandescent lamps. Further, the PAR arrangement, while preferred, is not necessary.

With reference to the embodiment of Figure 2, an array of LEDs 7 is the secondary light source and includes six series-connected LEDs mounted on a circuit board 8. The reflector 3 is provided with indentations in the bottom thereof to receive the respective LEDs, and portions 6 are aligned with the indentations and the LEDs to permit light from the LEDs to reach lens 4. The beams of light from the LEDs are spread by the lens 4 into a beam shape that is compatible with the primary (filament) light source. The LEDs and circuit board 8 are in thermal communication with a heat sink 9 that conducts heat to a skirt 16 of the lamp base.

One electrical lead 12 from the capsule 2 is connected by a wire 13 to a lamp base center contact 14 and supplies current to the lamp. The other electrical lead from the capsule 2 is connected by a wire 11 to an AC input of a bridge rectifier 17 mounted on circuit board 8. The LEDs in the LED array 7 are connected in series by conductive traces on circuit board 8 and form a continuous circuit between the positive and negative leads of bridge rectifier 17. The remaining bridge rectifier input is connected to the lamp base screw shell 15 by a wire 10. The skirt 16 is attached to reflector 3 by a mechanical connection and is electrically isolated from the screw shell 15.

The embodiment of Figure 3 is generally similar except that only one LED 7' is provided and this one LED 7' is on the axis of the reflector (which is aligned with the longitudinal axis of the capsule 2 and which is generally perpendicular to a top mounting surface of the lamp base). An LED with a tightly collimated beam aligned with the reflector axis can provide a beam pattern similar to that of the filament. The circuit board of Figure 2 may be removed and the LED 7' positioned on the heat sink 9. The LED 7' may be connected to bridge rectifier 17 through wires 18. Leads from capsule 2 may be connected to "L" shaped leads 19 that are connected to metal ferrules 20 attached to reflector 3. One ferrule is connected by wire 11 to an AC input of bridge rectifier 17 and the other ferrule is connected by wire 13 to lamp base center contact 14 and supplies current to the lamp. Wire 10 connects the second AC terminal of bridge rectifier 17 to screw shell 15.

While the array 7 or the LED 7' may be located in other positions on the lamp, mounting on the lamp base is preferred because the location provides a better match for the beam patterns of the LED(s) and filament and because a location on the lamp base facilitates electrical connection and heat sinking.

Further, the array 7 of LEDs in Figure 2 and the single LED 7' in Figure 3 preferably are arrayed symmetrically with respect to the axis of reflector 3, as they are in Figures 2-3. The symmetrical arrangements are particularly significant when the LEDs emit light with different color than the light emitted from the filament. It is desirable for the lamp to emit light that has a uniform color; that is, without "spots" of a different color caused by LEDs of one or more different colors asymmetrically included in the hybrid lamp.

The one or more LEDs may be included in the hybrid lamp to change the color temperature of light from the lamp. By way of explanation, a tungsten halogen PAR lamp typically has a correlated color temperature (CCT) of about 2900°K. However, fluorescent and or metal halide lamps may have a CCT of about 3500°K. When the halogen PAR lamp is used as an accent with the fluorescent or metal halide lamps (for example, in retail stores), studies have shown that the preferred CCT is above 3100°K at typical illuminance levels recommended for a retail environment. In order to increase the CCT of conventional tungsten halogen PAR lamps, a region of the orange spectrum must be filtered out. However, this reduces the number of lumens by more than 20 percent and causes the color rendering index (CRI) to be near 70, which is unacceptably low.

Accordingly, one of the features of the present invention is to add one or more LEDs, such as blue or white LEDs that have a cooler CCT (higher temperature) than that of light emitted by the filament of the primary light source. When a blue LED is added to a tungsten halogen PAR lamp as described above (e.g., as LED 7'), the light from the hybrid lamp has a higher CCT without lumen loss or poor CRI. Figure 4 shows the spectral power distribution of a 50W PAR38 lamp without the LED (control, dotted line) and with the blue LED (solid line). In this example, adding 48 lumens (from the LED) at 489nm with spectral half-width of 25nm shifts the CCT from 2890°K to 3500°K while increasing lumens by 7.2 percent and achieving a CRI of 81. Of course, other color LEDs may be chosen to provide a desired color temperature. If the color temperature is not to be changed, LEDs with a color temperature corresponding to that of the filament may be chosen.

During operation of the lamp in Figure 2, the lamp is energized with 120V AC that flows through the filament and bridge rectifier while DC flows through the LEDs. There is a potential drop of about 40V across the LED array and 80V across the filament. The LED array in this embodiment operates at 12W and the filament at 24W for a total lamp power of 36W. A 24W filament designed for 80V is shorter than a filament designed for 36W and 120V, providing the advantages noted above.

By way of comparison, a low cost driver with resistive ballasting can consume 50 percent of system power, or more, so a 36W LED lighting system using the same LED source is capable of only about 450 lumens. A 36W/120V hybrid lamp of the present invention can achieve 650 lumens, or about 18Lm/W without the need for the expensive and bulky driver. This is equivalent to a typical 50W/120V PAR lamp (filament only) but with almost 30 percent energy savings.

While embodiments of the present invention have been described in the foregoing specification and drawings, it is to be understood that the present invention is defined by the following claims when read in light of the specification and drawings.

## Claims

1. A lamp comprising a light-emitting filament and a light-emitting diode (LED), the LED being connected to receive its operating current through the filament.

2. The lamp of claim 1, further comprising a bridge rectifier connected between the filament and the LED.

3. The lamp of claim 2, wherein the bridge rectifier comprises plural LEDs.

4. The lamp of claim 1, wherein the operating current for the LED is controlled by a ballasting resistor, and wherein the filament is the ballasting resistor.

5. The lamp of claim 1, wherein the filament is inside a bulb of an incandescent or halogen lamp, and the LED is outside the bulb.

6. The lamp of claim 1, further comprising a lamp base to which the filament is attached, the LED being arranged on the lamp base in a heat conducting relationship so that the lamp base is a heat sink for the LED.

7. The lamp of claim 6, further comprising a reflector attached to the lamp base, the reflector having a heel portion over the lamp base through which light from the LED is transmitted.

8. The lamp of claim 1, wherein the LED is part of an array of plural LEDs connected in series.

9. The lamp of claim 1, further comprising a lamp base that includes a heat sink and a bridge rectifier, wherein the LED is on the lamp base in a heat conducting relationship with the heat sink and is electrically connected to the filament through the bridge rectifier so that the filament is a ballasting resistor for the LED.

10. The lamp of claim 1, wherein the LED is positioned symmetrically with respect to a longitudinal axis of the filament and wherein light from the filament has a first color temperature and light from the LED has a second color temperature higher than the first color temperature.

11. The lamp of claim 10, wherein the LED is blue.

12. A lamp comprising:
a lamp base and a reflector attached to said lamp base;
an incandescent or halogen lamp attached to said lamp base, said incandescent or halogen lamp comprising a light-emitting filament inside a bulb, said filament being aligned substantially along a longitudinal axis of said reflector; and
one or more light emitting diodes (LEDs) on said lamp base outside said bulb and
positioned symmetrically with respect to said longitudinal axis, said LEDs being electrically connected to said filament and receiving an operating current for said LEDs through said filament so that said filament is a ballasting resistor for said LEDs.

13. The lamp of claim 12, wherein said reflector is a parabolic aluminized reflector (PAR).

14. The lamp of claim 13, wherein a portion of said reflector over said lamp base is transparent and has one or more indentations therein that each receive a respective one of said LEDs.

15. The lamp of claim 13, further comprising a lens attached to said reflector opposite said lamp base and wherein said LEDs and said incandescent or halogen lamp are arranged to transmit light through said lens.

16. The lamp of claim 12, further comprising a bridge rectifier and wherein said LEDs are electrically connected to said filament through said bridge rectifier.

17. The lamp of claim 12, wherein said incandescent or halogen lamp emits light of a first color temperature and at least one of said LEDs emits light of a second color temperature higher than the first color temperature, and wherein light from the lamp has a uniform color temperature between the first and second color temperatures.

18. A lamp comprising:
a lamp base;
an incandescent or halogen lamp attached to said lamp base, said incandescent or halogen lamp comprising a light-emitting filament inside a bulb, said filament being aligned substantially along a longitudinal axis of said incandescent or halogen lamp; and
one or more light emitting diodes (LEDs) on said lamp base outside said bulb and
that are positioned symmetrically with respect to said longitudinal axis.

19. The lamp of claim 18, wherein one of said LEDs is on said longitudinal axis.

20. The lamp of claim 18, comprising plural said LEDs that are spaced symmetrically around said longitudinal axis.

21. The lamp of claim 18, wherein said LEDs are electrically connected to said incandescent or halogen lamp to receive an operating current through said filament and said filament is a ballasting resistor for said LEDs.

22. The lamp of claim 18, wherein said incandescent or halogen lamp emits light of a first color temperature and at least one of said LEDs emits light of a second color temperature higher than the first color temperature.

23. The lamp of claim 18, wherein said lamp base has a top mounting surface to which said incandescent or halogen lamp is attached and wherein said longitudinal axis is generally perpendicular to said top mounting surface.
